# EUROPEAN PATENT APPLICATION

(11) **EP 4 641 372 A1**
(43) Date of publication of application: **29.10.2025**
(21) Application number: 24881140.8
(22) Date of filing: 30.07.2024
(51) Int. Cl.: G06F 9/38

(54) **PROCESSOR FETCH REDIRECTION TIMING OPTIMIZATION CIRCUIT**

(30) Priority: 27.10.2023 CN 202311407467
(71) Applicant: Nanjing Qinheng Microelectronics Co., Ltd., Yuhuatai District Nanjing, Jiangsu 210012 (CN)
(72) Inventor: QUE, Qinghe, Nanjing, Jiangsu 210012 (CN); YANG, Yong, Nanjing, Jiangsu 210012 (CN)
(74) Representative: Murgitroyd & Company
(86) International application number: PCT/CN2024/108559
(87) International publication number: WO 2025/086769

(57) **Abstract**

Disclosed is a timing optimization circuit for processor fetching redirection, comprising a redirection dispatcher, a first selector, a second selector, an expectation register, a bus packaging unit, a bus register, an address increment unit, a sequence register, and a comparison module. Redirected fetching is optimized by means of using an optimization policy of independently using or using, in combination, part of a redirection request and part of redirection address bits. The redirection dispatcher delivers a first reconfiguration signal to the first selector and a second reconfiguration signal to the second selector. The first selector is connected to the expectation register, the second selector is connected to the bus packaging unit, and the comparison module is used for comparing expectation data and bus data separately, and determining whether the sequence register needs to be restored based on a comparison result to ensure accuracy of data in a timing optimization process. The circuit of the invention has simple structure, strong extensibility and good versatility, and also has good capabilities performance and timing performances.

## Description

### TECHNICAL FIELD

The present invention belongs to the technical field of processors, and more particularly, relates to a timing optimization circuit for processor fetching redirection.

### BACKGROUND

A processor fetching module is located at a front end of a modern processor pipeline, which mainly completes prefetching of program instructions from a memory to an instruction register. Fetching does not always access consecutive addresses, but also needs to quickly respond to various redirection requests of a later pipeline, such as program transfer, interrupt request, exception request, debugging request and the like. On the other hand, the fetching module needs to decode the address to generate control signals, such as chip selection signals and whether cacheability signals. Some application processors also need to complete conversion from a virtual address to a physical address. These control/address signals are connected to a bus interconnection network of a system and connected to corresponding memory interfaces with other modules of the system after arbitration. It can be seen from the above that, on one hand, the fetching module needs to accept the redirection request from the later pipeline and is required to complete fetching quickly. On the other hand, the fetching module needs to be connected to the bus interconnection network of the system, and good timing of bus signals is required, which plays a vital role in power consumption, performance and area convergence of the system. Designers of the fetching module often need to choose between timing and performance. Better timing will lose performance, while better performance will lead to worse timing and larger area. Therefore, the performance and the timing of the fetching module play a vital role in the whole processor architecture and system memory architecture.

### SUMMARY

Object of the present invention: in order to solve a problem that performance and timing of a processor fetching module in the prior art are difficult to be obtained simultaneously, the present invention provides a timing optimization circuit for processor fetching redirection.

Technical solutions: a timing optimization circuit for processor fetching redirection comprises a redirection dispatcher, a first selector, a second selector, an expectation register, a bus packaging unit, a bus register, an address increment unit, a sequence register, and a comparison module;
the redirection dispatcher inputs a CPU redirection request signal, and an output of the redirection dispatcher outputs a first recombination signal to the first selector, and outputs a second recombination signal to the second selector;
an input of the sequence register is connected to an two-to-one selector, and an output of the sequence register is connected to the first selector, the second selector and the bus packaging unit;
an input of the expectation register is at least connected to an output of the first selector, the expectation register is used for receiving a completed expectation address bit, and an output of the expectation register is connected to the comparison module and the two-to-one selector;
an input of the bus packaging unit is connected to an output of the second selector and the output of the sequence register, an output of the bus packaging unit is connected to the bus register and the address increment unit, an output of the bus register is connected to the comparison module, an output of the address increment unit is connected to the two-to-one selector, and the bus packaging unit sends a signal to a system bus matrix; and
an output of the comparison module is connected to a signal selection end of the two-to-one selector;
wherein, the CPU redirection request signal, the first recombination signal and the second recombination signal are all array structures, and array sizes of the CPU redirection request signal, the first reorganization signal and the second reorganization signal are respectively n0, n1 and n2, n0, n1 and n2 represent types of redirection requests, n0=n1, each group of data in the CPU redirection request signal comprises a redirection enable bit, a redirection address high-order bit and a redirection address low-order bit, each group of data in the first recombination signal at least comprises a redirection enable bit and a redirection address high-order bit, each group of data in the second recombination signal at least comprises a redirection enable bit and a redirection address low-order bit , and at least one of the following conditions is satisfied:
   (1) each group of data in the second recombination signal does not comprise a redirection address high-order bit; and
   (2) n2<n0.

Further, when the satisfied condition contains (1), a signal transmitted by the sequence register to the second selector only contains a sequence address low-order bit; and the output of the sequence register is also connected to the bus packaging unit, and is used for providing the bus packaging unit with a sequence address high-order bit.

Further, each group of data in the first recombination signal further comprises a redirection address low-order bit; and a signal transmitted by the sequence register to the first selector comprises a sequence address high-order bit and a sequence address low-order bit, and the first selector is used for providing the expectation register with a completed expectation address bit comprising an expectation address high-order bit and an expectation address low-order bit.

Further, when only the condition (2) is satisfied, each group of data in the second recombination signal contains a redirection enable bit, a redirection address high-order bit and a redirection address low-order bit, and a signal transmitted by the sequence register to the second selector contains a sequence address high-order bit and a sequence address low-order bit.

Further, each group of data in the first recombination signal does not comprise a redirection address low-order bit; a signal transmitted by the sequence register to the first selector only comprises a sequence address high-order bit, and the first selector is used for providing the expectation register with an expectation address high-order bit; and the output of the second selector is also connected to the expectation register, and is used for providing the expectation register with an expectation address low-order bit.

Further, the output of the sequence register is also connected to the bus packaging unit, and is used for providing the bus packaging unit with a sequence address high-order bit.

Further, the comparison module comprises a control comparison unit and an address comparison unit.

Further, the expectation register comprises an expectation control generator and an expectation address register, the output of the first selector is connected to the expectation address register, an output of the expectation address register is connected to an input of the address comparison unit and an input of the expectation control generator, CPU configuration information is input from the expectation control generator, the expectation control generator is used for generating required expectation control bit data according to the expectation address data and the CPU configuration information, and an output of the expectation control generator is connected to an input of the control comparison unit; and
the bus register comprises a bus control register and a bus address register, an input of the bus control register and an input of the bus address register are connected to the bus packaging unit, and an output of the bus control register and an output of the bus address register are respectively connected to the input of the control comparison unit and the input of the address comparison unit.

Further, the sequence register comprises a sequence control register and a sequence address register, and inputs of the sequence control register and the sequence address register are each connected to one two-to-one selector; a first input of the two-to-one selector connected to the sequence control register is connected to an output of the sequence control register, and a second input of the two-to-one selector connected to the sequence control register is connected to the output of the expectation control generator; the output of the sequence control register is connected to the bus packaging unit; a first input of the two-to-one selector connected to the sequence address register is connected to the output of the address increment unit, and a second input of the two-to-one selector connected to the sequence address register is connected to the output of the expectation address register; and an output of the sequence address register is connected to the first selector and the second selector.

Further, the bus packaging unit is used for receiving signals output by the sequence register and the second selector, assembling the signals into a bus control bit and a bus address bit, transmitting the bus control bit to the bus control register, and transmitting the bus address bit to the bus address register.

Compared with the prior art, the timing optimization circuit for processor fetching redirection provided by the present invention has the following beneficial effects:
The timing optimization circuit has simple structure, strong extensibility and good versatility. An optimization branch is used for selecting part of redirection request and/or part of address bit data, instead of selecting complete data, which can speed up a redirection response speed to a certain extent, and the processor can respond quickly when encountering a redirection request, and better capabilities are realized. A comparison mechanism is also designed to compare the bus data with the expectation data to prevent errors in selecting part of data, and to restore data in case of inconsistency to the expectation data, so as to ensure correct operation of the system. The timing performance is good, which has a positive impact on system power consumption and area convergence. Meanwhile, good capabilities and timing performances can be considered at the same time.

### BRIEF DESCRIPTION OF THE DRAWINGS

FIG. 1 is a schematic structural diagram of a timing optimization circuit for processor fetching redirection according to a first embodiment of the present invention;
FIG. 2 is a schematic structural diagram of a timing optimization circuit for processor fetching redirection according to a second embodiment of the present invention;
FIG. 3 is a schematic structural diagram of a timing optimization circuit for processor fetching redirection according to a third embodiment of the present invention;
FIG. 4 shows timing of an example of not restoring redirection in the third embodiment; and
FIG. 5 shows timing of an example of restoring redirection in the third embodiment.

### DETAILED DESCRIPTION

The present invention will be further described below with reference to the accompany drawings and specific embodiments.

First embodiment: an optimization policy of complete redirection request + part of address data is adopted in an optimization branch.

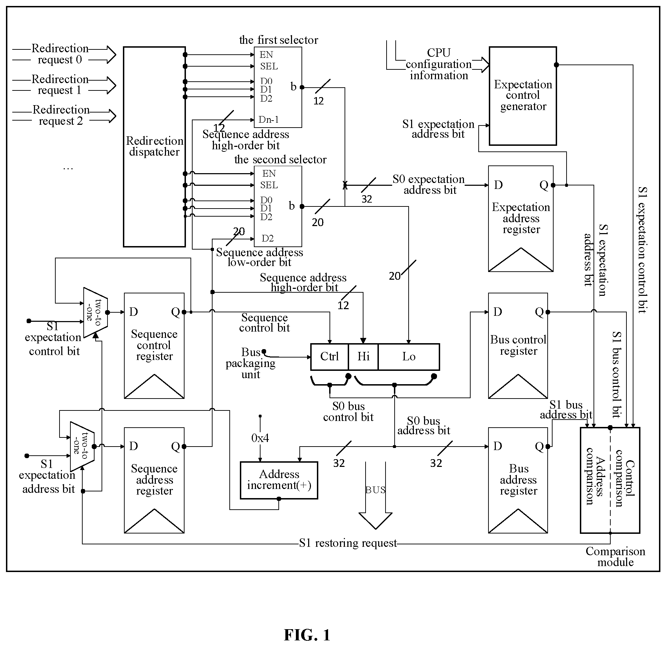

As shown in FIG. 1, a timing optimization circuit for processor fetching redirection comprises a redirection dispatcher, a first selector, a second selector, an expectation register, a bus packaging unit, a bus register, an address increment unit, a sequence register, and a comparison module.

An input of the redirection dispatcher inputs a CPU redirection request signal, and an output of the redirection dispatcher outputs a first recombination signal to the first selector, and outputs a second recombination signal to the second selector.

An input of the sequence register is connected to a two-to-one selector, and an output of the sequence register is connected to the first selector, the second selector and the bus packaging unit. The sequence register comprises a sequence control register and a sequence address register, and inputs of the sequence control register and the sequence address register are each connected to one two-to-one selector. A first input of the two-to-one selector connected to the sequence control register is connected to an output of the sequence control register, and a second input of the two-to-one selector connected to the sequence control register is connected to the output of the expectation control generator; the output of the sequence control register is connected to the bus packaging unit; a first input of the two-to-one selector connected to the sequence address register is connected to the output of the address increment unit, and a second input of the two-to-one selector connected to the sequence address register is connected to the output of the expectation address register; and an output of the sequence address register is connected to the first selector and the second selector. The signal selection ends of the two two-to-one selectors are both connected with the output of the comparison module, and the comparison module obtains a signal whether the data are consistent by comparing address and control bit data, and outputs a sequence signal if the comparison results are consistent, then the two-to-one selector selects data of a first input to be stored in the sequence register. If the comparison results are inconsistent, a restoring signal is output, and the two-to-one selector selects data of a second input, i.e., data from the expectation register, to be stored in the sequence register. The sequence address register transmits low-order address data to the second selector, and in this case, the signal transmitted by the sequence register to the second selector only contains the sequence address low-order bit. The output of the sequence register is also connected to the bus packaging unit, and is used for providing the bus packaging unit with a sequence address high-order bit. For example, a sequence address has a total of 32 bits, a sequence address high-order bit refers to the 12 bits of data in the high-order, and a sequence address low-order bit refers to the 20 bits of data in the low-order.

The expectation register comprises an expectation control generator and an expectation address register, the output of the first selector is connected to the expectation address register, an output of the expectation address register is connected to an input of the address comparison unit and an input of the expectation control generator, CPU configuration information is input from the expectation control generator, the expectation control generator is used for generating required expectation control bit data according to the expectation address data and the CPU configuration information, and an output of the expectation control generator is connected to an input of the control comparison unit. Input of the expectation register is at least connected to the output of the first selector, and a signal received by the expectation register needs to be a completed expectation address, comprising an expectation address high-order bit and an expectation address low-order bit. Therefore, if the sequence register transmits only a high-order address to the first selector, the expectation register needs to be connected to the second selector which provides a low-order address, because the first selector can only provide the expectation register with the high-order address. The output of the expectation register is connected to the comparison module and second inputs of the two two-to-one selectors.

An input of the bus packaging unit is connected to an output of the second selector and the output of the sequence register, an output of the bus packaging unit is connected to the bus register and the address increment unit, an output of the bus register is connected to the comparison module, an output of the address increment unit is connected to the two-to-one selector, and the bus packaging unit sends a signal to a system bus matrix. The bus packaging unit is used for receiving a sequence control bit transmitted by the sequence control register, a sequence address high-order bit directly provided by the sequence register and a sequence address low-order bit output by the second selector, assembling the sequence control bit, the sequence address high-order bit and the expectation address low-order bit together to form a bus control bit and a bus address bit, transmitting the bus control bit to the bus control register, and transmitting the bus address bit to the bus address register and the address increment unit. The bus packaging unit sends the signal to a system bus matrix (not shown in the figure).

The bus register comprises a bus control register and a bus address register, an input of the bus control register and an input of the bus address register are connected to the bus packaging unit, and an output of the bus control register and an output of the bus address register are respectively connected to the input of the control comparison unit and the input of the address comparison unit.

An output of the comparison module is connected to a signal selection end of the two-to-one selector. The comparison module is used for comparing data in the expectation register with data in the bus register, and deciding whether to restore the selected data according to that whether the data are compared to be consistent, so as to ensure that the data after the selection of the optimization branch are correct. The comparison module comprises a control comparison unit and an address comparison unit. The control comparison unit is used for comparing data of the expectation control generator and data of the bus control register. The address comparison unit is used for comparing data of the expectation address register and data of the bus address register.

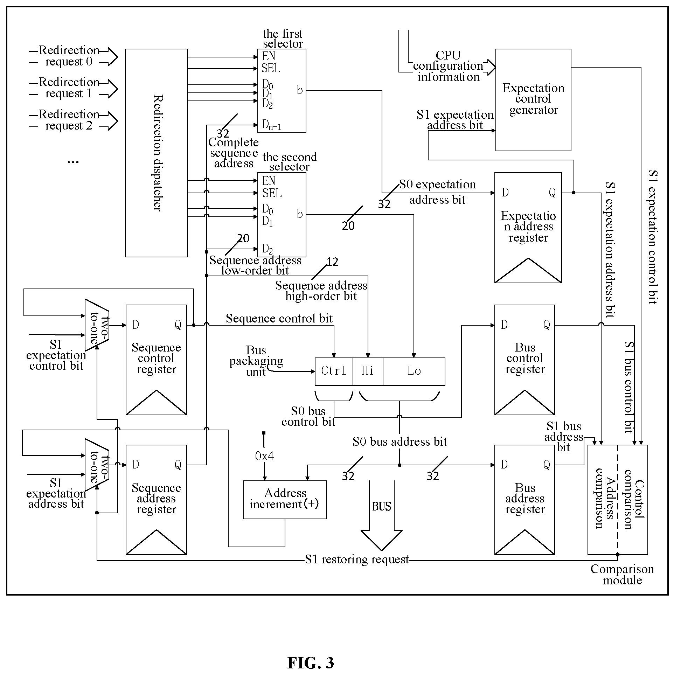

The CPU redirection request signal, the first recombination signal and the second recombination signal are all array structures, and array sizes of the CPU redirection request signal, the first reorganization signal and the second reorganization signal are respectively n0, n1 and n2, n0, n1 and n2 represent types of redirection requests, n0=n1, each group of data in the CPU redirection request signal comprises a redirection enable bit, a redirection address high-order bit and a redirection address low-order bit, and each group of data in the first recombination signal at least comprises a redirection enable bit and a redirection address high-order bit. Each group of data in the second recombination signal at least comprises a redirection enable bit and a redirection address low-order bit, and does not comprise a redirection address high-order bit. For example, a redirection address has a total of 32 bits, a redirection address high-order bit refers to the 12 bits of data in the high-order, and a redirection address low-order bit refers to the 20 bits of data in the low-order. In FIG. 1 to FIG. 3, reference numeral 12 represents the high-order 12 bits of the address and reference numeral 20 represents the low-order 20 bits of the address.

The first recombination signal may or may not contain a redirection address low-order bit. When the first recombination signal contains the redirection address low-order bit, the signal transmitted by the sequence register to the first selector comprises a sequence address high-order bit and a sequence address low-order bit. In this case, the output of the first selector is connected to the expectation address register, providing the expectation register with the expectation address high-order bit and the expectation address low-order bit, but this method has redundancy. When the first recombination signal does not contain the redirection address low-order bit, the signal transmitted by the sequence register to the first selector only comprises the sequence address high-order bit. The first selector only provides the expectation register with the expectation address high-order bit. In this case, the second selector also needs to be connected to the expectation register, and the second selector provides the expectation register low with the expectation address low-order bit. Compared with the former, the latter is better.

Because a critical path of a redirected address often comes from an addition circuit, the high-order address, which is affected by a carry chain, has a greater delay than the low-order address, but the high-order address that is redirected will not change in high probability. Under this circuit structure, only low-order address data are used to participate in selection, and high-order address data are avoided to participate in selection, which can reduce an output delay to a certain extent and make the redirection request be responded faster. However, when the comparison result obtained by the comparison module is inconsistent, it means that the high-order address data and/or control bit data have changed, so the selection of the optimization branch cannot be continued, and it is necessary to restore the correct address data and/or control bit data from the expectation register to the second selector, and re-initiate access to the bus to ensure that the data are correct.

Main functions of each module:
(1) Sequence address register
   The register contains high-order address data and low-order address data of sequential fetching. During sequential prefetching, the data are updated to an output value of an address increment module. When the information is restored, the data are updated to an output value of the expectation address register (S1 expectation address bit).
(2) Sequence control register
   The register comprises, but is not limited to chip selection, cacheability, protection and other control information. During sequential prefetching, the information remains unchanged. When the information is restored, the data are updated to an output value of the expectation control generator (S1 expectation control bit).
(3) Expectation address register
   D end (input) of the register is connected to an output address of the first selector (S0 expectation address bit, comprising a high-order address bit and a low-order address bit) and is sometimes connected to the output of the second selector (the first selector provides a high-order address bit and the second selector provides a low-order address bit ), is controlled by a pipeline handshake signal, registered at a rising edge of a CLOCK and output to a Q end (S1 expectation address bit).
(4) Expectation control generator
   According to the expectation address register and the CPU configuration information, the module generates required control information (S1 expectation control bit) after decoding, comparison and other combinational logic.
(5) Bus address register
   D end (input) of the register is connected to an address signal (S0 bus address bit, comprising a high-order and a low-order) of the bus packaging unit, is controlled by the pipeline handshake signal, registered at the rising edge of the CLOCK and output to a Q end (S1 bus address bit).
(6) Bus control register
   D end (input) of the register is connected to a control signal (S0 bus control bit) of the bus packaging unit, finally comes from an output signal of the sequence control register, is controlled by the pipeline handshake signal, is registered at the rising edge of the CLOCK, and is output to the Q end (S1 bus control bit).
(7) Redirection dispatcher
   An input of the module is the enable and address signals of all redirection requests in the CPU, and the recombination signal is generated according to an allocation strategy. The recombination signal contains corresponding selection, enable and address signals, and the recombination signal is distributed to the first selector and the second selector. An array size of the first recombination signal distributed to the first selector is the same as that of the CPU redirection request, and all the redirection requests need to be contained, and each group of data at least comprises a redirection enable bit and a redirection address high-order bit, and may also comprise a redirection address low-order bit, which are used for subsequently generating correct expectation address signals to the expectation register. However, each group of data in the array of the second recombination signal distributed to the second selector only contains the redirection enable bit and the redirection address low-order bit, but does not contain the redirection address high-order bit, and an array size of the second recombination signal is the same as that of the first recombination signal.
(8) First selector
   The first selector is a multiplexer, which is used for receiving all redirection request enablement and complete redirection address information from the redirection dispatcher, and at least the sequence address high-order bit provided by the sequence address register. After priority selection, the first selector can provide at least the expectation register with high-order address information and send the information to the D end (input) of the expectation address register (EXP_ADDR). If there is no redirection request in this case, an output value of the module is address data provided by the sequence address register. When the sequence address register only provides the first selector with the high-order address, the output value of the module is only the high-order address data.
(9) Second selector
   The second selector is a multiplexer, which is used for receiving all redirection request enablement and redirection address low-order bit (without redirection address high-order bit) from the redirection dispatcher and the sequence address low-order bit of the sequence address register, and after priority selection, outputting the low-bit address data and sending the data to the bus packaging unit. If there is no redirection request in this case, an output value of the module is the sequence address low-order bit provided by the sequence address register.
(10) Bus packaging unit
   The bus packaging unit is used for receiving high-order address data of the sequence address register, low-order address data of the second selector and sequence control bit data of the sequence control register. After simple packaging, a BUS signal is formed, sent to the address increment module, the bus address register and the bus control register, and send to a bus interconnection matrix of the system (not shown in the figure) at the same time.
(11) Address increment module
   The address increment module is used for receiving the complete bus address information (the high-order address information of the sequence address register spliced with the low-order address data of the second selector) assembled by the bus packaging unit, and generating an address signal of next instruction according to constraint conditions such as fetching width and alignment. The module is generally an addition circuit of bus address signal + constant.
(12) Comparison module
   The module is used for comparing consistency of the expectation data and the bus data, comprising comparing the expectation address register and the bus address register, and comparing the output values of the expectation control generator and the bus control register. If the address bit data and the control bit data are consistent, it is considered that the optimized bus fetching is valid, and then returned data of the bus, related address and control information of this stage can be sent to a later stage pipeline. Otherwise, it is considered that the optimized bus fetching is invalid, an S1 restoring request is generated, and the data of the expectation address register are restored to the sequence address register, and the data of the expectation control generator are restored to the sequence control register, and access to the bus is initiated again.

Second embodiment: an optimization policy of part of redirection request + complete address data is adopted in an optimization branch.

Compared with the first embodiment, the second embodiment differs in that each group of data in the second recombination signal comprises a redirection enable bit and a redirection address low-order bit, and further comprises a redirection address high-order bit. However, the array size n2 of the second recombination signal is smaller than the array size n1 of the first recombination signal (or CPU redirection request signal n0).

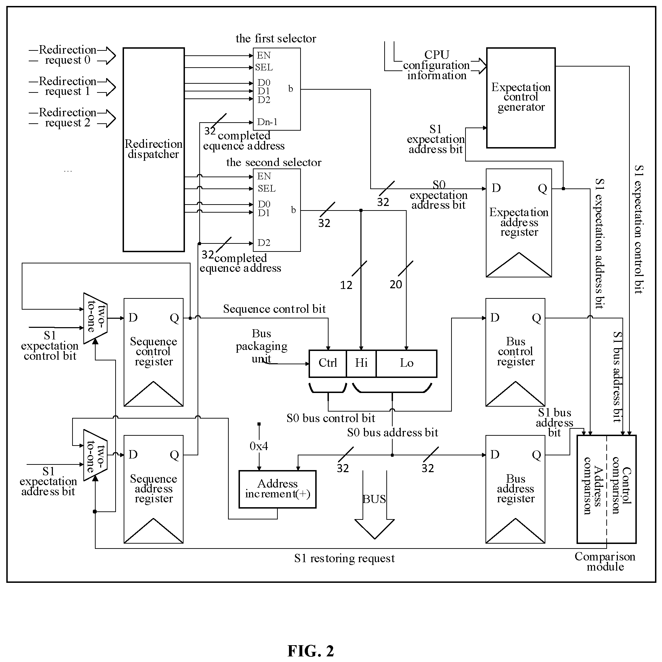

In terms of a connecting relationship, as shown in FIG. 2, the sequence address register transmits complete sequential address (comprising sequence address high-order bit and sequence address low-order bit) data to the first selector and the second selector, and all the address data received by the bus packaging unit are provided by the second selector. In this case, the sequence address register does not need to be connected to the bus packaging unit. The address data received by the bus packaging unit may also be directly provided with a sequence address high-order bit by the sequence address register, and provided with a low-order address by the second selector. In this case, the sequence address register needs to be connected to the bus packaging unit. The first recombination signal comprises complete redirection enable bit, redirection address low-order bit and redirection address high-order bit. Expectation address sources of the subsequent expectation register are all from the first selector.

In this embodiment, part of redirection is used to participate in the selection, which can reduce fan-in of the multiplexer and reduce an output delay to some extent. For example, there are five redirection requests in the system: restoring request, debugging request, interrupt request, branch prediction request and prediction failure request. The restoring request and the debugging solicit do not need quick fetching, that is, they are not frequent and insensitive to delay. However, the interrupt request, the branch prediction request and the prediction failure request need quick fetching, that is, they are frequent and sensitive to delay. Therefore, the redirection request that needs quick fetching may be selected in the second selector, while the first selector still selects all redirection requests. If the actual redirection request needs quick fetching, the redirection request may be selected directly through the second selector. Because a number of redirection requests that may be selected in the second selector is less than that in the first selector, faster response can be achieved by selecting through the second selector. What is shown is that array sizes of the CPU redirection request signal, the first recombination signal and the second recombination signal are n0, n1 and n2 respectively, and n0, n1 and n2 represent a type number of the redirection requests, so n0=n1>n2. If the actual redirection request doesn't need quick fetching, then it is certainly wrong to select the redirection request selected by the second selector, and the results compared by the comparison module are inconsistent, so the data in the sequence register will be restored by using the expectation register, such that the data in the second selector comes from the expectation register, that is, actual correct data, and the bus will be accessed again to ensure that the data are correct. As a whole, the method cannot only achieve the effect of quick fetching, but also ensure the correctness thereof.

Main functions of each module:
(1) The sequence address register, the sequence control register, the expectation control generator, the bus address register, the bus control register and the comparison module are the same as the first embodiment.
(2) Expectation address register
   D end (input) of the register is connected to an output address (S0 expectation address bit, comprising a high-order and a low-order) of a first multiplexer, is controlled by a pipeline handshake signal, registered at a rising edge of a CLOCK and output to a Q end (S1 expectation address bit).
(3) Redirection dispatcher
   An input of the module is the enable and address signals of all redirection requests in the CPU, and the recombination signal is generated according to an allocation strategy. The recombination signal contains corresponding selection, enable and address signals, and the recombination signal is distributed to the first selector and the second selector. An array size of the first recombination signal distributed to the first selector is the same as that of the CPU redirection request, i.e., n0=n1, and all the redirection requests need to be contained, and complete redirection addresses (high-order and low-order) are comprised, which are used for subsequently generating correct expectation address signals to the expectation register. Each group of data in the second recombination signal contains a redirection enable bit, a redirection address low-order bit and a redirection address high-order bit. However, an array size of the second recombination signal distributed to the second selector is smaller than that of the first recombination signal, that is, n2<1 (or the array size n0 of the CPU redirection request).
(4) First selector
   The first selector is a multiplexer, which is used for receiving first recombination data transmitted by the redirection dispatcher and complete sequence address provided by the sequence address register. After priority selection, the first selector can output a complete address signal and send the address signal to the D end (input) of the expectation address register (EXP_ADDR). If there is no redirection request in this case, an output value of the module is address data provided by the sequence address register.
(5) Second selector
   The second selector is a multiplexer, which is used for receiving second recombination data transmitted by the redirection dispatcher and the complete address data of the sequence address register. After priority selection, the second selector outputs at least low-order address data to the bus packaging unit, or may directly output the complete address data to the bus packaging unit (it is not necessary for the sequence address register to be connected to the bus packaging unit). When the low-order address is directly output only, the output of the sequence address register will also be connected to the bus packaging unit, and the sequence address register will directly provide the bus packaging unit with the high-order address. If there is no redirection request in this case, an output value of the module is complete sequence address data provided by the sequence address register.
(6) Bus packaging unit
   The bus packaging unit is used for receiving complete address data of the second selector (alternatively, comprising the sequence address register). After simple packaging, a BUS signal is formed, sent to the address increment module, the bus address register and the bus control register, and send to a bus interconnection matrix of the system (not shown in the figure) at the same time.
(7) Address increment module
   The address increment module is used for receiving the complete address information (the high-order address information of the sequence address register spliced with the low-order address data of the second selector, or the complete address data of the second selector) assembled by the bus packaging unit, and generating an address signal of next instruction according to constraint conditions such as fetching width and alignment. The module is generally an addition circuit of bus address signal + constant.

Third embodiment: an optimization policy of part of redirection request + part of address data is adopted in an optimization branch.

The third embodiment is equivalent to the combination of the first embodiment and the second embodiment, and also achieves the best effects. The following two conditions need to be satisfied at the same time:
(1) each group of data in the second recombination signal does not comprise the redirection address high-order bit; and
(2) n2<n0.

In connecting relationship, the third embodiment is the same as the first embodiment.

Main functions of each module:
(1) The sequence address register, the sequence control register, the expectation control generator, the expectation control generator, the bus address register, the bus control register, the first selector, the bus packaging unit, the address increment module and the comparison module are the same as the first embodiment.
(2) Redirection dispatcher
   An input of the module is the enable and address signals of all redirection requests in the CPU, and the recombination signal is generated according to an allocation strategy. The recombination signal contains corresponding selection, enable and address signals, and the recombination signal is distributed to the first selector and the second selector. An array size of the first recombination signal distributed to the first selector is the same as that of the CPU redirection request, needs to contain all the redirection requests, and at least comprises a redirection address high-order bit, and may also comprise a redirection address low-order bit, which are used for subsequently generating correct expectation address signals to the expectation register. However, each group of data in the array of the second recombination signal distributed to the second selector only contains the redirection enable bit and the redirection address low-order bit, but does not contain the redirection address high-order bit, and an array size n2 of the second recombination signal is smaller than the array sizes n1 of the first recombination signal (or the array size n0 of the CPU redirection request).
(3) Second selector
   The second selector is a multiplexer, which is used for receiving part of redirection request enablement and redirection address low-order bit (without redirection address high-order bit) from the redirection dispatcher and the sequence address low-order bit provided by the sequence address register, and after priority selection, outputting the low-bit address data and sending the data to the bus packaging unit. If there is no redirection request in this case, an output value of the module is the sequence address low-order bit provided by the sequence address register.

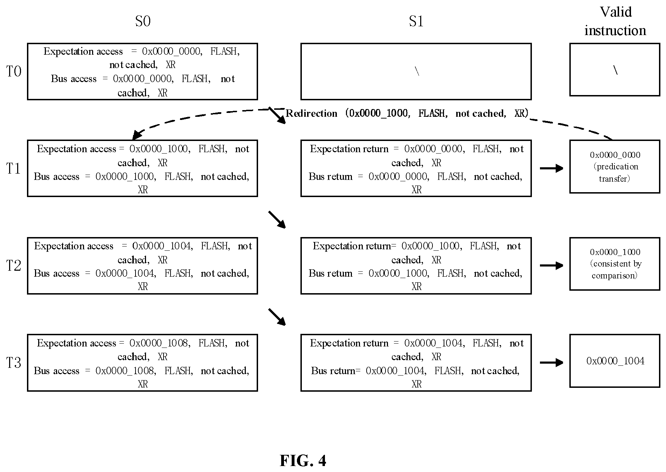

In the embodiment, characteristics of spatial and temporal locality of a program are fully utilized, and combined with a fact that not all redirections need quick response, part of redirection and low-order address data are selected and used, which can minimize a delay without losing performances of key codes, and is a preferred solution. A working process of the optimization circuit of the embodiment will be described below by way of example.
1. Timing of an example of not restoring redirection in this embodiment is shown in FIG. 4.

S0 represents the data input to the expectation register and the bus register, and S1 represents the data output from the expectation register and the bus register. The whole process is as follows:
(1) T0 cycle
   It is assumed that there is no redirection request, the value of the sequence address register (SEQ_ADDR) is 0x0000_0000; and a value of the sequence control register (SEQ_CTRL) is FLASH, not cached, XR (executable, readable); and
   it is assumed that the current S1 is invalid.
   Therefore:
      S0 expectation address bit 0x0000_0000 is equivalent to the sequence address register (SEQ_ADDR);
      S0 bus address bit 0x0000_0000 is equivalent to the sequence address register (SEQ_ADDR); and
      S0 bus control bit FLASH, not cached, XR (executable, readable), is equivalent to the sequence control register (SEQ_CTRL).
      This cycle (a rising edge of next cycle) is ended, and the following steps are performed:
         a. registering S0 expectation address bit to the expectation address register (EXP_ADDR);
         b. registering S0 bus address bit to the bus address register (BUS_ADDR);
         c. registering S0 bus control bit to the bus control register (BUS_CTRL);
         d. updating the sequence address register (SEQ_ADDR) as an output value (0x0000_0004) of the address increment module; and
         e. keeping the sequence control register (SEQ_CTRL) unchanged.
(2) T1 cycle:
   S1 expectation address bit 0x0000_0000 is equivalent to S0 expectation address bit of last cycle;
   S1 bus address bit 0x0000_0000 is equivalent to S0 bus address bit of last cycle;
   S1 expectation control bit FLASH, not cached, XR (executable, readable), is obtained by decoding and comparing S1 expectation address bit and CPU configuration register; and
   S1 bus control bit FLASH, not cached, XR (executable, readable), is equivalent to S0 bus address bit of last cycle.

After comparison by the comparison module (CMP), the expectation data and the bus data are consistent, and the returning of the bus this time is valid, and a valid instruction at address 0x0000_0000 is output; moreover, it is assumed that the instruction is predicted to transfer in the current cycle, and a target address thereof is 0x0000_1000; in addition, it is assumed that a control bit of the target address is FLASH, not cached, XR (executable, readable). Therefore, the redirection dispatcher receives the prediction transfer request with the target address 0x0000_1000, FLASH, not cached, XR (executable, readable).

Therefore:
S0 expectation address bit 0x0000_1000 comes from the redirection dispatcher;
a high-order address of S0 bus address bit 0x0000_1000 comes from the sequence address register (SEQ_ADDR) and a low-order address of S0 bus address bit 0x0000_1000 comes from the redirection dispatcher; and
S0 bus control bit FLASH, not cached, XR (executable, readable), is equivalent to the sequence control register (SEQ_CTRL).

This cycle (a rising edge of next cycle) is ended, and the following steps are performed:
a. registering S0 expectation address bit to the expectation address register (EXP_ADDR);
b. registering S0 bus address bit to the bus address register (BUS_ADDR);
c. registering S0 bus control bit to the bus control register (BUS_CTRL);
d. updating the sequence address register (SEQ_ADDR) as an output value (0x0000_1004) of the address increment module; and;
e. keeping the sequence control register (SEQ_CTRL) unchanged.

### (3) T2 cycle:

S1 expectation address bit 0x0000_1000 is equivalent to S0 expectation address bit of last cycle;
S1 bus address bit 0x0000_1000 is equivalent to S0 bus address bit of last cycle;
S1 expectation control bit FLASH, not cached, XR (executable, readable), is obtained by decoding and comparing S1 expectation address bit and CPU configuration register; and
S1 bus control bit FLASH, not cached, XR (executable, readable), is equivalent to S0 bus address bit of last cycle.

After comparison by the comparison module (CMP), the expectation data and the bus data are consistent, and the returning of the bus this time is valid, and a valid instruction at address 0x0000_1000 is output; moreover, it is assumed that the instruction is an ordinary instruction and no prediction transfer occurs. There is no request from the redirection dispatcher, so a fetching unit completes redirection and continues a sequential prefetching process.

Therefore:
S0 expectation address bit 0x0000_1004 is equivalent to the sequence address register (SEQ_ADDR);
S0 bus address bit 0x0000_1004 is equivalent to the sequence address register (SEQ_ADDR); and
S0 bus control bit FLASH, not cached, XR (executable, readable), is equivalent to the sequence control register (SEQ_CTRL).

This cycle (a rising edge of next cycle) is ended, and the following steps are performed:
a. registering S0 expectation address bit to the expectation address register (EXP_ADDR);
b. registering S0 bus address bit to the bus address register (BUS_ADDR);
c. registering S0 bus control bit to the bus control register (BUS_CTRL);
d. updating the sequence address register (SEQ_ADDR) as an output value (0x0000_1008) of the address increment module; and
e. keeping the sequence control register (SEQ_CTRL) unchanged.

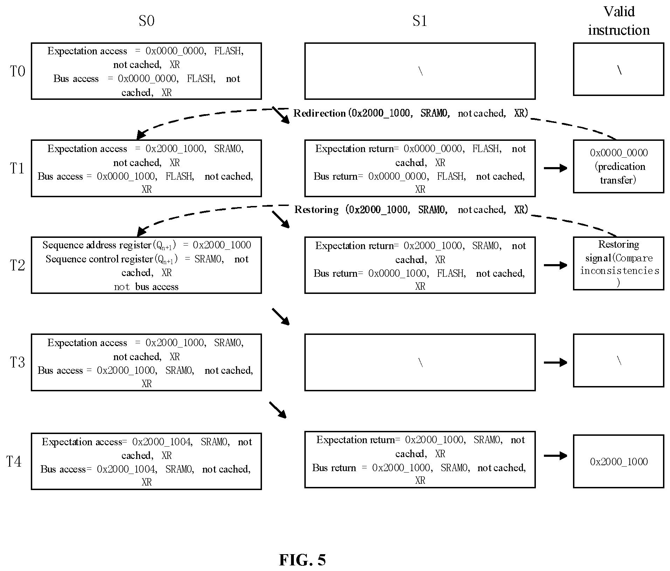

2. Timing of an example of restoring redirection in this embodiment is shown in FIG. 5.

### (1) T0 cycle

It is assumed that there is no redirection request, the value of the sequence address register (SEQ_ADDR) is 0x0000_0000; and a value of the sequence control register (SEQ_CTRL) is FLASH, not cached, XR (executable, readable); and
it is assumed that the current S1 is invalid.

Therefore:
S0 expectation address bit 0x0000_0000 is equivalent to the sequence address register (SEQ_ADDR);
S0 bus address bit 0x0000_0000 is equivalent to the sequence address register (SEQ_ADDR); and
S0 bus control bit FLASH, not cached, XR (executable, readable), is equivalent to the sequence control register (SEQ_CTRL).

This cycle (a rising edge of next cycle) is ended, and the following steps are performed:
a. registering S0 expectation address bit to the expectation address register (EXP_ADDR);
b. registering S0 bus address bit to the bus address register (BUS_ADDR);
c. registering S0 bus control bit to the bus control register (BUS_CTRL);
d. updating the sequence address register (SEQ_ADDR) as an output value (0x0000_0004) of the address increment module; and
e. keeping the sequence control register (SEQ_CTRL) unchanged.

### (2) T1 cycle:

S1 expectation address bit 0x0000_0000 is equivalent to S0 expectation address bit of last cycle;
S1 bus address bit 0x0000_0000 is equivalent to S0 bus address bit of last cycle;
S1 expectation control bit FLASH, not cached, XR (executable, readable), is obtained by decoding and comparing S1 expectation address bit and CPU configuration register; and
S1 bus control bit FLASH, not cached, XR (executable, readable), is equivalent to S0 bus address bit of last cycle.

After comparison by the comparison module (CMP), the expectation data and the bus data are consistent, and the returning of the bus this time is valid, and a valid instruction at address 0x0000_0000 is output; moreover, it is assumed that the instruction is predicted to transfer in the current cycle, and a target address thereof is 0x2000_1000; in addition, it is assumed that a control bit of the target address is SRAMO, not cached, XR (executable, readable). Therefore, the redirection dispatcher receives the prediction transfer request with the target address 0x2000_1000, SRAMO, not cached, XR (executable, readable).

Therefore:
S0 expectation address bit 0x2000_1000 comes from the redirection dispatcher;
A high-order address of S0 bus address bit 0x0000_1000 comes from the sequence address register (SEQ_ADDR) and a low-order address of S0 bus address bit 0x0000_1000 comes from the redirection dispatcher; and
S0 bus control bit FLASH, not cached, XR (executable, readable), is equivalent to the sequence control register (SEQ_CTRL).

This cycle (a rising edge of next cycle) is ended, and the following steps are performed:
a. registering S0 expectation address bit to the expectation address register (EXP_ADDR);
b. registering S0 bus address bit to the bus address register (BUS_ADDR);
c. registering S0 bus control bit to the bus control register (BUS_CTRL);
d. updating the sequence address register (SEQ_ADDR) as an output value (0x0000_1004) of the address increment module; and
e. keeping the sequence control register (SEQ_CTRL) unchanged.

### (3) T2 cycle:

S1 expectation address bit 0x2000_1000 is equivalent to S0 expectation address bit of last cycle;
S1 bus address bit 0x0000_1000 is equivalent to S0 bus address bit of last cycle;
S1 expectation control bit SRAMO, not cached, XR (executable, readable), is obtained by decoding and comparing S1 expectation address bit and CPU configuration register; and
S1 bus control bit FLASH, not cached, XR (executable, readable), is equivalent to S0 bus address bit of last cycle.

After comparison by the comparison module (CMP), the expectation data and the bus data are inconsistent, and the returning of the bus this time is invalid, a restoring signal is generated, and the bus access of the current S0 is canceled.

Therefore, S0 is invalid.

This cycle (a rising edge of next cycle) is ended, and the following steps are performed:
a. restoring the sequence address register (SEQ_ADDR) as an output value (0x2000_1000) of the expectation address register (EXP_ADDR); and
b. restoring the sequence control register (SEQ_CTRL) as an output value (SRAM0, not cached, XR (executable, readable) of the expectation control generator (EXP_CTRL).

### (4) T3 cycle:

S0 in the last cycle is invalid, so S1 in the current cycle is invalid.

The restoring signal is generated in last cycle, therefore:
S0 expectation address bit 0x2000_1000 is equivalent to the sequence address register (SEQ_ADDR);
S0 bus address bit 0x2000_1000 is equivalent to the sequence address register (SEQ_ADDR); and
S0 bus control bit SRAMO, not cached, XR (executable, readable), is equivalent to the sequence control register (SEQ_CTRL).

This cycle (a rising edge of next cycle) is ended, and the following steps are performed:
a. registering S0 expectation address bit to the expectation address register (EXP_ADDR);
b. registering S0 bus address bit to the bus address register (BUS_ADDR);
c. registering S0 bus control bit to the bus control register (BUS_CTRL);
d. updating the sequence address register (SEQ_ADDR) as an output value (0x2000_1004) of the address increment module; and
e. keeping the sequence control register (SEQ_CTRL) unchanged.

### (5) T4 cycle:

S1 expectation address bit 0x2000_1000 is equivalent to S0 expectation address bit of last cycle;
S1 bus address bit 0x2000_1000 is equivalent to S0 bus bit of last cycle;
S1 expectation control bit SRAMO, not cached, XR (executable, readable), is obtained by decoding and comparing S1 expectation address bit and CPU configuration register; and
S1 bus control bit SRAMO, not cached, XR (executable, readable), is equivalent to S0 bus address bit of last cycle.

After comparison by the comparison module (CMP), the expectation data and the bus data are consistent, and the returning of the bus this time is valid, and a valid instruction at address 0x2000_1000 is output. At this point, a fetching unit completes restoring and continues sequential prefetching process.

Therefore:
S0 expectation address bit 0x2000_1004 is equivalent to the sequence address register (SEQ_ADDR);
S0 bus address bit 0x2000_1004 is equivalent to the sequence address register (SEQ_ADDR); and
S0 bus control bit FLASH, not cached, XR (executable, readable), is equivalent to the sequence control register (SEQ_CTRL).

This cycle (a rising edge of next cycle) is ended, and the following steps are performed:
f. registering S0 expectation address bit to the expectation address register (EXP_ADDR);
g. registering S0 bus address bit to the bus address register (BUS_ADDR);
h. registering S0 bus control bit to the bus control register (BUS_CTRL);
i. updating the sequence address register (SEQ_ADDR) as an output value (0x2000_1008) of the address increment module; and
j. keeping the sequence control register (SEQ_CTRL) unchanged.

## Claims

1. A timing optimization circuit for processor fetching redirection, comprising a redirection dispatcher, a first selector, a second selector, an expectation register, a bus packaging unit, a bus register, an address increment unit, a sequence register, and a comparison module, wherein:
the redirection dispatcher receives CPU redirection request signals at an input of the redirection dispatcher, and an output of the redirection dispatcher delivers the first reconfiguration signal to the first selector and the second reconfiguration signal to the second selector;
an input of the sequence register connects to the two-to-one selector, and an output of the sequence register connects to both the first selector and the second selector, as well as the bus packaging unit;
an input for the expected register should, at a minimum, be connected to the output of the first selector., the expectation register is used for receiving a completed expectation address bits, and the output of the expectation register is connected to the comparison module and the two-to-one selector;
an input of the bus packaging unit is linked to the outputs of both the second selector and the sequence register,an output of the bus packaging unit connects to the bus register and the address increment unit, an output of the bus register connects the comparison module, as well as, while an output of the address increment unit connects to the two-to-one selector, the bus packaging unit forwards signals to the system bus matrix.
and an output of the comparison module is connected to a signal selection end of the two-to-one selector;
wherein, the CPU redirection request signal, the first recombination signal and the second recombination signal are all array structures, and array sizes of the CPU redirection request signal, the first reorganization signal and the second reorganization signal are respectively n0, n1 and n2, n0, n1 and n2 represent types of redirection requests, n0=n1, each group of data in the CPU redirection request signal comprises a redirection enable bit, a redirection address high-order bit and a redirection address low-order bit, each group of data in the first recombination signal at least comprises a redirection enable bit and a redirection address high-order bit, each group of data in the second recombination signal at least comprises a redirection enable bit and a redirection address low-order bit , and at least one of the following conditions is satisfied:
(1) each group of data in the second recombination signal does not comprise a redirection address high-order bit; and
(2) n2<n0.

2. The timing optimization circuit for processor fetching redirection according to claim 1, wherein when the satisfied condition contains (1), a signal transmitted by the sequence register to the second selector only contains a sequence address low-order bit; and the output of the sequence register is also connected to the bus packaging unit, and is used for providing the bus packaging unit with a sequence address high-order bit.

3. The timing optimization circuit for processor fetching redirection according to claim 2, wherein each group of data in the first recombination signal further comprises a redirection address low-order bit; and a signal transmitted by the sequence register to the first selector comprises a sequence address high-order bit and a sequence address low-order bit, and the first selector is used for providing the expectation register with a completed expectation address bit comprising an expectation address high-order bit and an expectation address low-order bit.

4. The timing optimization circuit for processor fetching redirection according to claim 1, wherein when only the condition (2) is satisfied, each group of data in the second recombination signal contains a redirection enable bit, a redirection address high-order bit and a redirection address low-order bit, and a signal transmitted by the sequence register to the second selector contains a sequence address high-order bit and a sequence address low-order bit.

5. The timing optimization circuit for processor fetching redirection according to any one of claims 1 to 4, wherein each group of data in the first recombination signal does not comprise a redirection address low-order bit; a signal transmitted by the sequence register to the first selector only comprises a sequence address high-order bit, and the first selector is used for providing the expectation register with an expectation address high-order bit; and the output of the second selector is also connected to the expectation register, and is used for providing the expectation register with an expectation address low-order bit.

6. The timing optimization circuit for processor fetching redirection according to any one of claims 1 to 4, wherein the output of the sequence register is also connected to the bus packaging unit, and is used for providing the bus packaging unit with a sequence address high-order bit.

7. The timing optimization circuit for processor fetching redirection according to any one of claims 1 to 4, wherein the comparison module comprises a control comparison unit and an address comparison unit.

8. The timing optimization circuit for processor fetching redirection according to any one of claims 1 to 4, wherein the expectation register comprises an expectation control generator and an expectation address register, the output of the first selector is connected to the expectation address register, an output of the expectation address register is connected to an input of the address comparison unit and an input of the expectation control generator, CPU configuration information is input from the expectation control generator, the expectation control generator is used for generating required expectation control bit data according to the expectation address data and the CPU configuration information, and an output of the expectation control generator is connected to an input of the control comparison unit; and
the bus register comprises a bus control register and a bus address register, an input of the bus control register and an input of the bus address register are connected to the bus packaging unit, and an output of the bus control register and an output of the bus address register are respectively connected to the input of the control comparison unit and the input of the address comparison unit.

9. The timing optimization circuit for processor fetching redirection according to claim 8, wherein the sequence register comprises a sequence control register and a sequence address register, and input ends of the sequence control register and the sequence address register are each connected to one two-to-one selector; a first input of the two-to-one selector connected to the sequence control register is connected to an output of the sequence control register, and a second input of the two-to-one selector connected to the sequence control register is connected to the output of the expectation control generator; the output of the sequence control register is connected to the bus packaging unit; a first input of the two-to-one selector connected to the sequence address register is connected to the output of the address increment unit, and a second input of the two-to-one selector connected to the sequence address register is connected to the output of the expectation address register; and an output of the sequence address register is connected to the first selector and the second selector.

10. The timing optimization circuit for processor fetching redirection according to claim 8, wherein the bus packaging unit is used for receiving signals output by the sequence register and the second selector, assembling the signals into a bus control bit and a bus address bit, transmitting the bus control bit to the bus control register, and transmitting the bus address bit to the bus address register.
